# EUROPEAN PATENT SPECIFICATION

(11) **EP 3 354 672 B1**
(45) Date of publication and mention of the grant of the patent: **08.04.2020**
(21) Application number: 17153584.2
(22) Date of filing: 27.01.2017
(51) Int. Cl.: C08G 59/32, C08G 59/06, C08G 59/08, C08G 8/24

(54) **PREPARATION AND APPLICATION OF DICYCLOPENTADIENE-PHENOL AND 2,6-DIMETHYL PHENOL COPOLYMER EPOXY RESIN**
HERSTELLUNG UND ANWENDUNG VON DICYCLOPENTADIEN-PHENOL UND 2,6-DIMETHYL-PHENOL-COMPOLYMER-EPOXIDHARZ
PRÉPARATION ET APPLICATION DE CYCLOPENTADIÈNE-PHÉNOL ET DE RÉSINE ÉPOXY COPOLYMÈRE PHENOL 2,6-DIMÉTHYL

(43) Date of publication of application: 01.08.2018
(73) Proprietor: Nan-Ya Plastics Corporation, Taipei (TW)
(72) Inventor: LEE, Cheng-Chung, Taipei (TW); WU, Chen-Hua, Taipei (TW); YU, Jaou-Shain, Taipei (TW)
(74) Representative: Viering, Jentschura & Partner mbB Patent- und Rechtsanwälte

(56) References cited:
- CN-A- 103 613 738
- CN-A- 104 193 592
- CN-A- 106 146 803
- US-A- 2 658 885

## Description

### [Technical Fields]

The present invention discloses a dicyclopentadiene phenol and 2,6-dimethyl phenol copolymer epoxy resin and preparation method thereof. When this new dicyclopentadiene phenol and 2,6-dimethyl phenol copolymer epoxy resin according to the present invention is substituted into compositions for laminate, its hardening products has high heat resistance, high glass-transition temperature Tg, low dielectric constant Dk, low dissipation factor Df, and applicable for use as the insulating material of high performance printed circuit boards, semiconductor encapsulation materials, and other high reliability electronic components.

### [Prior Art]

Taiwan Patent TW216439 discloses a dicyclopentadiene-phenol epoxy resin, which is a epoxy resin with special skeleton construction, structurally contains cycloaliphatic hexatomic ring and five-membered ring, aromatic benzene ring, dicyclopentadiene, and has high heat resistance and low polarity, and its hardening product hardened by hardening agents has low water-absorbing quality and excellent electrical property (low dielectric constant Dk, low dissipation factor Df), and dicyclopentadiene structure has function to reduce the internal stress of cured product. Therefore, the dicyclopentadiene -phenol epoxy resin is always used in glass fiber laminate and printed circuit board industries. Also, extension reaction is made further for the phenolic hydroxyl group (phenolic OH group) of the dicyclopentadiene phenol resin to synthesize benzoxazine resin, active ester resin, benzene alkenyl resin, etc. having high performance, better electrical property, and lower dielectric constant and dissipation factor for the purpose of meeting the tendency requirements of high frequency and high speed electronic products. However, for a long time, our research on electrical property of dicyclopentadiene-phenol epoxy resin shows it has better effect in reduction of the dielectric constant Dk, and smaller effect in reduction of the dissipation factor Df.

Taiwan Patent TW201038151 provides a bifunctional 2,6-dimethyl phenol formaldehyde resin synthesized by reacting 2,6-dimethyl phenol and aldehydes in the present of acid catalyst. The bifunctional 2,6-dimethyl phenol formaldehyde epoxy resin is synthesized from the bifunctional 2,6-dimethyl phenol formaldehyde resin and epichlorohydrin (ECH) in the present of NaOH. Because it has high symmetrical chemical structure, low molecular dipole moment and other feature, 2,6-dimethyl phenol formaldehyde resin can effectively reduce the dielectric constant (Dk) and the dissipation factor (Df), and 2,6-dimethyl phenol is a raw material for synthesizing a material with low dielectric constant (Dk) and low dissipation factor (Df) - polyphenyl ether resin (PPE). The PPE materials feature very low dissipation factor (Df), and the lower the dissipation factor, and the small signal transmission loss. Although the bifunctional 2,6-dimethyl phenol formaldehyde epoxy resin according to patent TW201038151 can effectively reduce the dielectric constant and the dissipation factor (Df), the structural hardening product of the bifunctional 2,6-dimethyl phenol formaldehyde epoxy resin has lower crosslink density, lower glass-transition temperature Tg and poor heat resistance.

Chinese Application CN 106 146 803 A provides a phosphorus-containing flame-retardant hardener. The phosphorus compound is a low dielectric compound DOPO and 2,6-dimethylbenzene acid (2,6-dimethyl phenol) an the nitrogen-containing compound Melamine (melaine) (nitrogen and phosphorus have better flame retardancy synergy effect) are grafted onto bisphenol A with bisphenol A novolac resin polymer to produce low dielectric properties and flame retardancy effect.

To meet the high speed transmission of electronic communication products, for electronic equipment, high speed and high frequency signal transmission is necessary and continuous development tendency. Additionally, as the electronic components trends to be light, thin, short and small, research and development of a resin with low dielectric constant (Dk), low dissipation factor (Df), high heat resistance and high glass-transition temperature Tg is a task expected in the printed circuit board industry.

### [Summary of the Invention]

Therefore, to complete the above task, the present invention provide a dicyclopentadiene phenol resin and 2,6-dimethyl phenol copolymer epoxy resin, and this copolymer epoxy resin not only has the excellent electrical property of two resins (low dielectric constant Dk and low dissipation factor Df) but also higher heat resistance than the above two resins, disclosed in TW201038151 and TW216439. As it has the excellent electrical property of the dicyclopentadiene phenol epoxy resin and the 2,6-dimethyl phenol formaldehyde epoxy resin, particularly the low dissipation factor Df of the 2,6-dimethyl phenol formaldehyde epoxy resin, the dicyclopentadiene phenol resin and 2,6-dimethyl phenol copolymer epoxy resin according to the present invention has better electrical property than the dicyclopentadiene-phenol epoxy resin. Also, the copolymer is bonded with the dicyclopentadiene phenol resin and the 2,6-dimethyl phenol formaldehyde resin by addition reaction and is reacted with the epichlorohydrin to prepare the dicyclopentadiene phenol resin and 2,6-dimethyl phenol formaldehyde resin copolymer epoxy resin, compared with the dicyclopentadiene-phenol epoxy resin and the 2,6-dimethyl phenol formaldehyde epoxy resin, the copolymer epoxy resin according to the present invention has reactive epoxy groups with higher functional cardinal number, higher hardening and crosslink density, higher heat resistance, and better mechanical properties. When this new epoxy resin according to the present invention is substituted into compositions for laminate, their hardening product has low dielectric constant (Dk), low dissipation factor (Df), good mechanical properties and high glass-transition temperature Tg, and the high heat resistance of hardenability resign hardening product, and is suitable for copper clad substrate, printed circuit boards, semiconductor encapsulation materials to meet the demand for high speed transmission of electronic communication products, and the high speed and high frequency signal transmission of electronic equipment.

The preparation method for the dicyclopentadiene phenol resin and 2,6-dimethyl phenol copolymer epoxy resin according to the present invention comprises the following steps: condensation reaction of the dicyclopentadiene phenol resin with low dielectric constant (Dk) and low dissipation factor (Df) and 2,6-dimethyl phenol to synthesize the dicyclopentadiene phenol resin and 2,6-dimethyl phenol copolymer phenolic resin with more functional cardinal number (6-12), reacting the dicyclopentadiene phenol resin and 2,6-dimethyl phenol copolymer phenolic resin with excess epichlorhydrin under NaOH condition to prepare dicyclopentadiene phenol and 2,6-dimethyl phenol copolymer epoxy resin. The epoxy resin hardening product prepared by the dicyclopentadiene phenol resin and 2,6-dimethyl phenol copolymer epoxy resin and common epoxy resin hardening agent such as dicyandiamide Dicy, phenolic resin PN hardening agent, styrene maleic anhydride copolymer SMA, benzoxazine resin (Benzoxazine), polyphenyl ether resin (PPE) and active ester resin (active ester) has low dielectric constant (Dk), low dissipation factor (Df), good heat resistance and high Tg.

The present invention provides a new dicyclopentadiene phenol resin and 2,6-dimethyl phenol copolymer epoxy resin with the molecular structure shown in formula 1 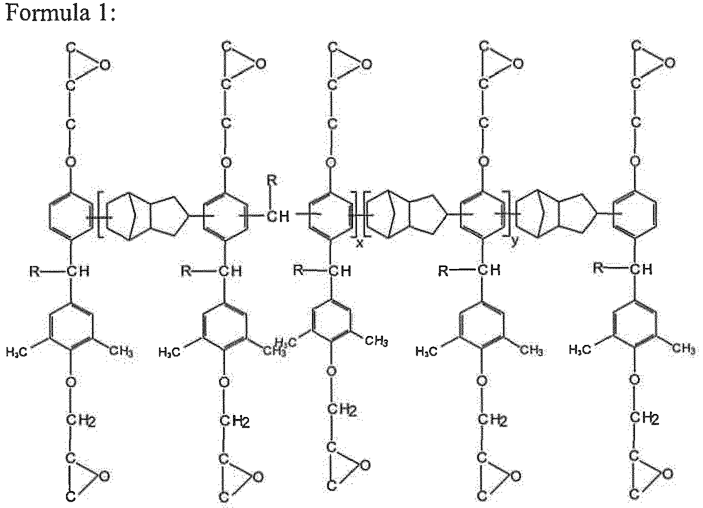 wherein
X is equal to 1-5 integers, and Y is equal to 1-5 integers; and
R represents a hydrogen, C₁-C₁₀ alkyl group, phenyl group, phenyl or hydroxyl group.

This new dicyclopentadiene phenol and 2,6-dimethyl phenol copolymer epoxy resin is prepared in two steps: Step 1, reacting (a1) dicyclopentadiene phenol resin represented by following structural formula 2 with (a2) 2,6-dimethyl phenol in the presence of acid catalyst by (a3) aldehyde compounds to synthesize the dicyclopentadiene phenol resin and the 2,6-dimethyl phenol copolymer phenolic resin,

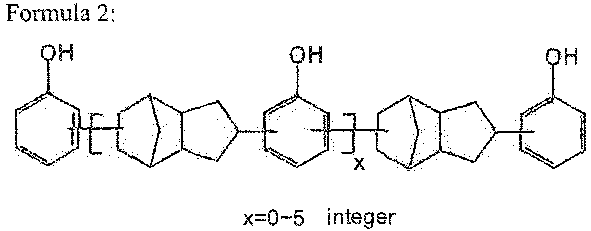

Reacting 1 mole phenolic hydroxy (phenolic group OH) of (a1) dicyclopentadiene phenol resin, (a2) 2,6-dimethyl phenol 1-2.5 mole and (a3) aldehyde compounds 0.8-1.5 mole. Step 2, reacting the dicyclopentadiene phenol and 2,6-dimethyl phenol copolymer with excess epichlorhydrin under NaOH condition to prepare the dicyclopentadiene phenol and 2,6-dimethyl phenol copolymer epoxy resin. The equivalence ratio of the dicyclopentadiene-phenol and 2,6-dimethyl phenol copolymer to epichlorohydrin (ECH) is 1: 1-8, and the equivalence ratio of dicyclopentadiene -phenol and 2,6-dimethyl phenol copolymer to NaOH is 1: 0.95-1.1.

The dicyclopentadiene phenol resin and 2,6-dimethyl phenol copolymer epoxy resin according to the present invention is characterized by reaction bonding and epoxidation of two resins with excellent electrical property (low dielectric constant Dk and low dissipation factor Df) such as the dicyclopentadiene phenol resin and the 2,6-dimethyl phenol resin, and so has the characteristic of the dicyclopentadiene phenol epoxy resin, such as low dielectric constant Dk, and low water absorption, and the characteristic of the 2,6-dimethyl phenol epoxy resin such as low dielectric constant Dk and low dissipation factor Df. Therefore, this new dicyclopentadiene phenol resin and 2,6-dimethyl phenol copolymer epoxy resin has better electrical property (low dielectric constant Dk and low dissipation factor Df) than the dicyclopentadiene phenol epoxy resin. The preparation method includes the following steps: condensation and dehydration reaction of the dicyclopentadiene phenol resin and the 2,6-dimethyl phenol with the aldehyde compounds in the present of the acid catalyst to bond two resins, that is to say, bonding a plurality of reaction points in the dicyclopentadiene phenol resin with the 2,6-dimethyl phenol by using the aldehyde compounds as a cross-linking agent to prepare a copolymer (see the following equation):

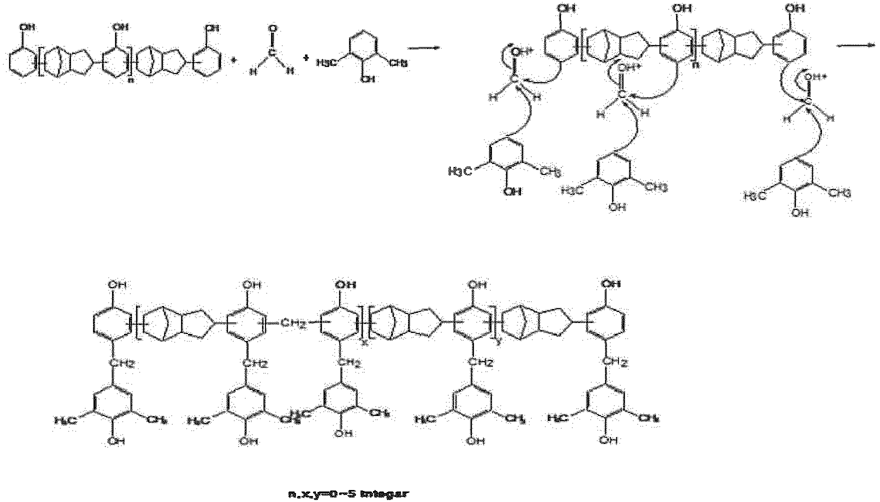

The functional cardinal number f of phenolic hydroxyl group (phenolic group OH) on the copolymer structure is equal to the number of phenolic hydroxyl group (n+2) of the dicyclopentadiene phenol resin plus the number of 2,6-dimethyl phenol bonded with the dicyclopentadiene phenol resin x+y+2, and so x+y=n, i.e. f=2n+4. Compared with the dicyclopentadiene phenol resin or the 2,6-dimethyl phenol formaldehyde resin, the copolymer contains the more functional cardinal number of the phenolic hydroxyl group. The functional cardinal number of the phenolic hydroxyl group is directly proportional to the equivalent weight of the aldehyde compounds. The larger the equivalent weight of the aldehyde compounds, the more cross linking agent bonded, and the more the functional cardinal number of the phenolic hydroxyl group in the dicyclopentadiene phenol resin and the 2,6-dimethyl phenol copolymer. The average molecular weight Mn and the equivalent weight 150g/eq of phenolic hydroxyl group is analyzed by a gel permeation chromatography (GPC). According to theoretical formula, functional cardinal number = Mn ÷ equivalent weight of phenolic hydroxyl group, the theoretical average functional cardinal number is 6-10. The epoxidation is performed for the dicyclopentadiene phenol resin and the phenolic hydroxyl group of the 2,6-dimethyl phenol copolymer to synthesize the dicyclopentadiene phenol resin and 2,6-dimethyl phenol copolymer epoxy resin having more functional groups, better heat resistance after hardening and high glass-transition temperature Tg, thereby obtaining expected the dicyclopentadiene phenol resin and 2,6-dimethyl phenol copolymer epoxy resin having low Dk and Df, good heat resistance, and high Tg.

The present invention further provides a preparation method for dicyclopentadiene phenol resin and 2,6-dimethyl phenol copolymer epoxy resin, comprising two steps: Step 1, adding (a1) 1 mole phenolic hydroxyl group (phenolic group OH) of dicyclopentadiene phenol resin, and (a2) 2,6-dimethyl phenol 1-2.5 mole into the acid catalyst, and dissolve 0.8-1.5 mole aldehyde compound in water, and dropwise add the solution into the above reaction mixture, and react with the aqueous solution of aldehyde compound at 95-115°C for 1-6h. The common acid catalyst includes methanesulfonic acid (MSA), p-toluenesulfonic acid (PTSA), oxalic acid and hydrochloric acid, and the content of the acid catalyst is 0.5-5% of the content of the dicyclopentadiene phenol resin. The aldehyde compounds include formaldehyde, acetaldehyde, glyoxal, and benzaldehyde. After reaction and neutralization, remove 2,6-dimethyl phenol, wash and remove the solvent to obtain the dicyclopentadiene phenol resin and 2,6-dimethyl phenol copolymer phenolic resin. Step 2: react the dicyclopentadiene phenol resin and 2,6-dimethyl phenol copolymer phenolic resin prepared in Step 1 with excess epichlorohydrin in the present of NaOH under common epoxidation condition to prepare the dicyclopentadiene phenol and 2,6-dimethyl phenol copolymer epoxy resin. The equivalence ratio of the dicyclopentadiene-phenol and 2,6-dimethyl phenol copolymer to epichlorohydrin (ECH) is 1: 1-8, and the equivalence ratio of dicyclopentadiene-phenol and 2,6-dimethyl phenol copolymer to NaOH is 1: 0.95-1.1. The temperature of epoxidation pre-reaction and main reaction is 50-100°C. Obtain the dicyclopentadiene phenol resin and 2,6-dimethyl phenol copolymer epoxy resin according to the present invention after removing the epichlorohydrin, refining reaction, desalination, neutralization, washing, solution filtration, and removing the solvent.

The present invention further discloses a epoxy resin varnish for glass fiber substrate, comprising (1) the dicyclopentadiene phenol resin and 2,6-dimethyl phenol copolymer epoxy resin according to the present invention, the content of which is 30-80% of the resin (the total content of the resin is equal to the sum of the contents of the components 1-4) ; (2) a multifunctional or bifunctional, or modified epoxy resin, the content of which is 0-25% of the resin, selected from o-cresol phenolic aldehyde epoxy resin, phenolic aldehyde epoxy resin, benzaldehyde- phenol multifunctional epoxy resin, dicyclopentadiene-phenol epoxy resin, bisphenol A formaldehyde epoxy resin, tetraphenol ethane phenolic aldehyde epoxy resin, tri-(hydroxy phenyl) methane phenolic aldehyde epoxy resin, phosphorus containing epoxy resin, 2,6-dimethyl phenol phenolic aldehyde epoxy resin, brominated epoxy resin, tetrabromobisphenol A epoxy resin, bisphenol A epoxy resin, and epoxide and isocyanate copolymer; (3) a hardening agent, the content of which is 15-60% of the resin, selected from phenolic resin, bisphenol A phenolic resin, dicyclopentadiene phenol resin, benzaldehyde-phenol phenolic resin, melamine - phenol phenolic resin (melamine-phenol novolac), active ester hardening agent, styrene maleic anhydride copolymer (SMA), bisphenol A benzoxazine (BPA Benzoxazine), bisphenol F benzoxazine (BPF Benzoxazine), dicyclopentadiene-phenolbenzoxazine (Dicyclopentadiene-phenol Benzoxazine), polyphenyl ether (PPE), and more than two (or two) of the above hardening agents; (4) a fire retardant, the content of which is 10-40% of the resin, including a reactive fire retardant and a additive fire retardant, selected from phosphorus containing bisphenol A phenolic aldehyde hardening agent (phosphorus content 5-10%), hexaphenoxy cyclotriphosphazene (phosphorus content 13.4%, nitrogen content8%) and tetrabromobisphenol A (bromine content 58.5%); (5) a filler, the content of which is 0-45% of the all varnish components (calculated in the solid state, the total component content of the varnish is equal to the sum of the content of the components 1-5), selected from silicon dioxide and aluminium hydroxide; (6) a solidification accelerant, the content of which is 0.01-0.2% of epoxy resin + hardening agent (i.e. the sum of the content of components 1-3), selected from dimethyl imidazole, diphenyl imidazole, diethyl tetramethyl imidazole and benzyl dimethylamine; and (7) a solvent, the content of which is 50-70% of all solid varnish components, selected from acetone, butanone, cyclohexanone, dimethoxy ethanol (MCS), propylene glycol monomethyl ether (PM), and methylbenzene.

The hardening product obtained by the dicyclopentadiene phenol resin and 2,6-dimethyl phenol copolymer epoxy resin according to the present invention and its varnish after thermal hardening may be used in different applications, including, for example, insulating material for PCB, EMC semiconductor encapsulation and high reliability motor/ electronic component, and coating and adhesive requiring excellent electrical property and heat resistance.

Advantages of invention: the present invention provides the preparation method and application of a dicyclopentadiene phenol resin and 2,6-dimethyl phenol copolymer epoxy resin, and the hardening product prepared by its varnish after thermal hardening has excellent heat resistance, low dielectric constant, low dissipation factor (Df), high Tg, and conforms to the high speed and high frequency development tendency of electronic industry.

### [Detailed Description of the Preferred Embodiment]

The detailed description is provided below to more clearly understand the present invention.

The dicyclopentadiene phenol resin and 2,6-dimethyl phenol copolymer epoxy resin according to the present invention has the most obvious advantage that two resins with the excellent electrical property, such as the dicyclopentadiene phenol epoxy resin and the 2,6-dimethyl phenol formaldehyde epoxy resin, are bonded by grafting reaction, and therefore, the copolymer epoxy resin according to the present invention has better electrical property (low dielectric constant Dk and low dissipation factor Df), heat resistance and Tg property than the above two resins disclosed in TW201038151 and TW201038151. The dicyclopentadiene phenol resin and the 2,6-dimethyl phenol formaldehyde resin are bonded with aldehyde compounds by the grafting reaction in the presence of the acid catalyst, and then epoxidation reaction is performed with the epichlorohydrin to prepare the epoxy resin. Due to the bonding by the grafting reaction, the epoxy resin according to the present invention has more functional cardinal number of epoxy group, higher crosslink density after hardening, and so has better electrical property (low dielectric constant Dk and low dissipation factor Df), heat resistance and Tg property than the above two resins.

Explicitly, the preparation method for the dicyclopentadiene phenol resin and 2,6-dimethyl phenol copolymer epoxy resin according to the present invention comprises two steps: Step 1 (synthesis of dicyclopentadiene phenol resin and 2,6-dimethyl phenol copolymer phenolic resin): add 1 mole phenolic hydroxyl group (phenolic group OH) of (a1) dicyclopentadiene phenol resin and (a2) 2,6-dimethyl phenol 1-2.5 mole into the solvent with intermediate boiling point and low water solubility (boiling point >110°C), add the acid catalyst, heat to 95-115°C, dissolve 0.8-1.5 mole aldehyde compound in water to prepare 20-50% aqueous solution of aldehyde compound (if the aldehyde compound is liquid, do not prepare the aqueous solution), dropwise add the aqueous solution into the above reaction mixture, react with the aqueous solution of aldehyde compound at 95-115°C for 1-6h. The common acid catalyst comprises methanesulfonic acid (MSA), p-toluenesulfonic acid (PTSA), oxalic acid, hydrochloric acid. The use level of the acid catalyst is 0.5-5% of the use level of the dicyclopentadiene phenol resin, and the aldehyde compound comprises formaldehyde, acetaldehyde, glyoxal, benzaldehyde. In the reaction process, the removal of the water may result in the full reaction of the aldehyde compound, and addition of the solvent is to remove the water by co-boiling with the water and remove the aqueous phase by phase separation. The solvent is selected form methyl isobutyl ketone (MIBK), methylbenzene and other solvent with intermediate boiling point and low water solubility. The use level of the solvent is 5-20% of the use level of the dicyclopentadiene phenol resin. After dropwise addition and reaction, perform ripening reaction for 30min -2h. After the reaction, neutralize the acid catalyst with alkali. The alkali is not limited, including common industrial alkali, such as sodium hydroxide, potassium hydroxide, amine. After neutralization to pH 6-7, heat to 175-185°C to remove the solvent and 2,6-dimethyl phenol. After 175-185□ is reached, slowly reduce vacuum degree to prevent suddenly boiling till vacuum degree < 666.61 Pa (<5torr). Under the condition of vacuum degree < 666.61 Pa (<5 torr), maintain 175-185°C for 1h. continuously add the solvent such as the methyl isobutyl ketone (MIBK), the methylbenzene and so on, add water for desalination and washing, and obtain the dicyclopentadiene phenol resin and the 2,6-dimethyl phenol copolymer phenolic resin after filtration, removal of the solvent,

Step 2 (synthesis of dicyclopentadiene phenol and 2,6-dimethyl phenol copolymer epoxy resin): reacting the dicyclopentadiene -phenol and 2,6-dimethyl phenol copolymer prepared in Step 1 with excess epichlorohydrin in the present of sodium hydroxide (NaOH) to prepare dicyclopentadiene phenol and 2,6-dimethyl phenol copolymer epoxy resin, as shown in Steps (1) - (5). (1) pre-reaction: add the dicyclopentadiene phenol resin and 2,6-dimethyl phenol copolymer phenolic resin and the epichlorohydrin (ECH), the equivalence ratio of which is 1: 1-8, into a cosolvent, the use level of which is 10-40% of the dicyclopentadiene phenol resin and the 2,6-dimethyl phenol copolymer phenolic resin. The cosolvent comprises propylene glycol monomethyl ether (PM) or alcohol. Add 49.5% NaOH. The equivalence ratio of the dicyclopentadiene phenol resin and 2,6-dimethyl phenol copolymer phenolic resin to NaOH is 1: 0.1-0.2; pre-reaction temperature is 50-100°C and pre-reaction time is 2-4h. (2) Main reaction: dropwise add the 49.5% NaOH into the reaction mixture at 0.77-0.97:1 equivalence ratio of NaOH to the dicyclopentadiene phenol resin and 2,6-dimethyl phenol copolymer phenolic resin; reaction temperature is 60-65°C, vacuum degree is 21331.52 - 25331.18 Pa (160-190torr) and dropwise addition time is 2-5h, and during the main reaction, remove the water from the reaction system by co-boiling of water and ECH, and return the ECH on the low layer to the system by phase separation in the phase separating barrel, and discharge the water layer. (3) Removal of epichlorohydrin: remove the excess epichlorohydrin ECH at 160°C temperature and vacuum degree < 666.61 Pa (<5 torr). (4) Refining reaction: add the solvent to prepare 30-50% solid content of resin solution, add 20% NaOH for refining reaction; the use level of NaOH = measured value of hydrolysable chlorine ÷ 35.5 × 40 × refining coefficient 1.5 × weight of resin ÷ 0.2; refining reaction temperature is 70-90°C, and refining reaction time is 1-3h. (5) After the reaction, add the water for desalination and liquid separation, and filter the resin solvent after neutralizing and washing the separated liquid, and obtain the dicyclopentadiene phenol and 2,6-dimethyl phenol copolymer epoxy resin according to the present invention after removal of the solvent.

More detailed description of the preparation method for dicyclopentadiene phenol and 2,6-dimethyl phenol copolymer epoxy resin according to the present invention, for example, comprising the above Steps 1 and 2. Step 1: add 1 mole phenolic hydroxyl group (phenolic group OH) of (a1) dicyclopentadiene phenol resin and (a2) 2,6-dimethyl phenol 1-2.5 mole into the solvent with intermediate boiling point and low water solubility (boiling point >110°C), add the acid catalyst, heat to 95-115°C, dissolve 0.8-1.5 mole aldehyde compound in water to prepare 20-50% aqueous solution of aldehyde compound (if the aldehyde compound is liquid, do not prepare the aqueous solution), dropwise add the aqueous solution into the above reaction mixture. To achieve the high percent conversion and high reaction rate in the reaction process, remove water by separating the water using the solvent with intermediate boiling point and low water solubility and phase in the phase separating barrel and discharging the water layer, and return the ECH on the low layer to the system. Dropwise add the aqueous solution of aldehyde compound to achieve better reaction efficiency and more complete reaction. The reaction in this step may cause two results: first, the dicyclopentadiene phenol resin is bonded through reacting the aldehyde with its dicyclopentadiene-phenol or the aldehyde with the 2,6-dimethyl phenol with; second, the 2,6-dimethyl phenol is bonded through reacting the aldehyde with its 2,6-dimethyl phenol. The weight average molecular weight of the prepared product has positive correlation with the use level of the aldehyde compound. The use level of the aldehyde compound is the total equivalent weight of the dicyclopentadiene phenol resin and the 2,6-dimethyl phenol, and the equivalent weight of the added aldehyde compound is preferably 0.8-1.2.

Step 2: synthesis of the dicyclopentadiene -phenol and 2,6-dimethyl phenol copolymer phenolic resin obtained in Step 1 into the dicyclopentadiene phenol and 2,6-dimethyl phenol copolymer epoxy resin under common epoxidation condition, i.e. epoxidation reaction with the excess epichlorohydrin in the present of sodium hydroxide to prepare the dicyclopentadiene-phenol and 2,6-dimethyl phenol copolymer phenolic resin.

The preferred embodiment of the present invention is detailed by the following embodiments.

### Embodiment A: (synthesis of dicyclopentadiene phenol and 2,6-dimethyl phenol copolymer epoxy resin A)

Mix and heat dicyclopentadiene phenol resin (Nan Ya Plastics Corporation, NPEH-772L, softening point 85°C) 170g (1 mole phenolic hydroxyl group), 2,6-dimethyl phenol 170g, solvent methyl isobutyl ketone (MIBK) 30g, catalyst methanesulfonic acid MSA 1.7g to 107°C, react for 3.5h after dropwise adding 23% formaldehyde solution 130g at 107°C, and perform the ripening reaction for 1h at 107°C. After the reaction, add 0.8g 49.5% aqueous solution NaOH to neutralize till pH=6-7, heat to 140°C for dehydration, and continuously heat to 185°C and slowly reduce the vacuum degree to 666.61 Pa (5 torr). After the temperature and the vacuum degree reaches set value 185°C and 666.61 Pa (5torr), maintain the temperature and the vacuum degree for 1h. Add the solvent methyl isobutyl ketone 550g after cooling and vacuum breakage, stir for 60min at 80°C, add water 50g, stand for layering at 80°C, remove the saline layer at lower layer; add water 50g for washing, stand for layering at 80°C, remove the water layer at lower layer, and repeatedly wash for 1 time. After filtration of the solution, dehydrate at 120°C, heat to 180°C, reduce the vacuum degree to less than 666.61 Pa (5 torr), and remove the solvent methyl isobutyl ketone (MIBK) to obtain dicyclopentadiene-phenol and 2,6-dimethyl phenol copolymer phenolic resin A with 99.5% yield and quality situation: average molecular weight Mw2500, softening point 126°C, equivalent weight of phenolic hydroxyl group 150g/eq.

Mix and heat dicyclopentadiene-phenol and 2,6-dimethyl phenol copolymer resin phenolic resin A 150g, epichlorohydrin 555g, and propylene glycol monomethyl ether PM 166g to 60°C, add 49.5% NaOH 12.1g for 3h pre-reaction; dropwise add 49.5% NaOH 66g into the mixed solution for main reaction at temperature 62°C and vacuum degree 23997.96 Pa (180 torr) for 4h, end the main reaction at 150°C and 1333.22 Pa (10 torr), dehydrate and remove the ECH after maintaining the above condition for 1h, add and dissolve the solvent methyl isobutyl ketone 207g at 80°C for 30min, add purified water 196g, stand 15min for layering after stirring at 80°C, and remove the water layer at lower layer. According to analysis the hydrolysable chlorine of the resin is 2500ppm. Perform refining reaction at 80°C, add 49.5% sodium hydroxide 1.75g and purified water 2g to react for 2h. Continuously add the solvent MIBK 276g and purified water 50g, stand for 15min for phase separation after stirring at 80°C, remove the water layer at lower layer; add purified water 30g and 10%NaH₂PO₄ 20g, stand for 15min for phase separation, remove the water layer at lower layer when the pH is 6-7; add purified water 40g stand for 15min for phase separation, remove the water layer at lower layer; heat to 117°C for circulation dehydration for 1h, heat to 150°C after filtration of the solution, gradually reduce the vacuum degree to 666.61 Pa (5torr), and maintain 150°C and 666.61 Pa (5torr) for 1h to obtain the dicyclopentadiene phenol and 2,6-dimethyl phenol copolymer epoxy resin A according to the present invention.

### Quality situation: epoxide equivalent 228g/eq, hydrolysable chlorine 240ppm, weight average molecular weight Mw3500.

### Embodiment B: (synthesis of dicyclopentadiene phenol and 2,6-dimethyl phenol copolymer epoxy resin B)

Mix and heat dicyclopentadiene phenol resin (Nan Ya Plastics Corporation, NPEH-772L, softening point 110°C) 180g (1 mole phenolic hydroxyl group), 2,6-dimethyl phenol 170g, solvent methyl isobutyl ketone (MIBK) 30g, catalyst methanesulfonic acid MSA 1.7g to 107°C, react for 3.5h after dropwise adding 23% formaldehyde solution 130g at 107°C, and perform the ripening reaction for 1h at 107°C. After the reaction, add 0.8g 49.5% aqueous solution NaOH to neutralize till pH=6-7, heat to 140°C for dehydration, and continuously heat to 185°C and slowly reduce the vacuum degree to 666.61 Pa (5 torr). After the temperature and the vacuum degree reaches set value 185°C and 666.61 Pa (5 torr), maintain the temperature and the vacuum degree for 1h. Add the solvent methyl isobutyl ketone 550g after cooling and vacuum breakage, stir for 60min at 80°C, add water 50g, stand for layering at 80°C, remove the saline layer at lower layer, add water 50g for washing, stand for layering at 80°C, remove the water layer at lower layer, and repeatedly wash for 1 time. After filtration of the solution, dehydrate at 120°C, heat to 180°C, reduce the vacuum degree to less than 666.61 Pa (5torr), and remove the solvent methyl isobutyl ketone (MIBK) to obtain dicyclopentadiene-phenol and 2,6-dimethyl phenol copolymer phenolic resin B with 99.5% yield and quality situation: average molecular weight Mw2800, softening point 129°C, equivalent weight of phenolic hydroxyl group 154g/eq.

Mix and heat dicyclopentadiene-phenol and 2,6-dimethyl phenol copolymer resin phenolic resin B 154g, epichlorohydrin 555g, and propylene glycol monomethyl ether PM 166g to 60°C, add 49.5% NaOH 12.1g for 3h pre-reaction for; dropwise add 49.5% NaOH 66g into the mixed solution for main reaction at temperature 62°C and vacuum degree 23997.96 Pa (180torr) for 4h, and end the main reaction at 150°C and 1333.22 Pa (10torr), dehydrate and remove the ECH after maintaining the above condition for 1h, add and dissolve the solvent methyl isobutyl ketone 207g at 80°C for 30min, add purified water 196g, stand 15min for layering after stirring at 80°C, and remove the water layer at lower layer. According to analysis the hydrolysable chlorine of the resin is 2200ppm. Perform the refining reaction at 80°C, add 49.5% sodium hydroxide 1.70g and purified water 2g to react for 2h. Continuously add the solvent MIBK 276g and purified water 50g, stand for 15min for phase separation after stirring at 80°C, remove the water layer at lower layer; add purified water 30g and 10%NaH₂PO₄ 20g, stand for 15min for phase separation, remove the water layer at lower layer when the pH is 6-7; add purified water 40g stand for 15min for phase separation, remove the water layer at lower layer; heat to 117°C for circulation dehydration for 1h, heat to 150°C after filtration of the solution, gradually reduce the vacuum degree to 666.61 Pa (5 torr), and maintain 150°C and 666.61 Pa (5 torr) for 1h to obtain the dicyclopentadiene phenol and 2,6-dimethyl phenol copolymer epoxy resin B according to the present invention.

### Quality situation: epoxide equivalent 232g/eq, hydrolysable chlorine 210ppm, weight average molecular weight Mw3800.

### See Table 1 for the physical properties of the copper-clad plate prepared in Samples 1-5

In Examples 1-5, the dicyclopentadiene phenol and 2,6-dimethyl phenol copolymer epoxy resin according to the present invention is used as the component of the resin varnish with good heat resistance and low dielectric constant to prepare the glass fiber substrate. See Table 1 for the compositions of the resin varnish. For example, preparation of the glass fiber substrate by 65% resin varnish with solid content adjusted by the solvent, such as propylene glycol monomethyl ether (PM), or butanone, or acetone, in known method: dip 7628 glass fibre cloth in the above resin solution, dry for several minutes at 170°C (including temperature dipping machine), adjust the melt viscosity of the dried dipping sheet by controlling the drying time, the minimum of which is 400-1000 Pas (4000-10000poise), finally overlap 8 dipping sheets between two 35-um copper clad layer by layer, and at 25kg/cm² pressure and temperature rise control order:
85°C → 85°C→ 200°C→ 200°C→ 130°C
20min 30min 120min slowly cooling
To obtain 1.6mm copper clad laminates after hot-pressing.

**Table 1 Composition of varnish used and physical property of glass fiber substrate prepared in embodiment**

| Item | Example 1 | Example 2 | Example 3 | Example 4 | Example 5 |
|---|---|---|---|---|---|
| Dicyclopentadiene phenol and 2,6-dimethyl phenol copolymer epoxy resin Embodiment A | 100 | - | 80 | 85 | 75 |
| Dicyclopentadiene phenol and 2,6-dimethyl phenol copolymer epoxy resin Embodiment B | - | 100 | - | - | - |
| Benzaldehyde-phenol multifunctional group epoxy resin Nan Ya Plastics Corporation NPPN-433 EEW240g/eq | - | - | - | - | 25 |
| Phenolic resin Nan Ya Plastics Corporation NPEH-710H OH 105g/eq | 10 | 10 | - | - | 10 |
| Melamine-phenol novolac SD-1817 OH 80g/eq | 5 | 5 | 6.3 | 5 | 5 |
| Phosphorus hardening agent Shina LC950 OH 340g/eq | 21 | 21 | 21 | 21 | 21 |
| Active ester hardening agent DICHPC8000 OH 223g/eq | 30 | 30 | - | 50 | 30 |
| Additive-type phosphorus fire retardant Dazhong SPB-100 | 16 | 16 | 20 | 18 | 16 |
| Styrene-maleic anhydride copolymer SMA | - | - | 50 | - | - |
| Bisphenol F BX, benzoxazine Nan Ya Plastics Corporation NPEX-235 | - | - | 40 | - | - |
| Polyphenyl ether PPE sabic MX-9000 | - | - | - | 15 | - |
| Filler Si02 | 98 | 98 | 106 | 104 | 98 |
| Accelerant 2MI/DMF | 0.03 | 0.03 | 0.02 | 0.025 | 0.03 |
| Solvent PM or MEK | 150 | 150 | 163 | 160 | 150 |
| Tg °C | 176 | 181 | 180 | 178 | 173 |
| Dk (3G) | 4.20 | 4.20 | 4.21 | 4.15 | 4.23 |
| Df (3G) | 0.006 | 0.0065 | 0.0068 | 0.0055 | 0.007 |
| T-288 (copper-bearing) heat resistance (minute) | >60 | >60 | >60 | >60 | >60 |
| T288 solder heat resistance (minute) | >10 | >10 | >10 | >10 | >10 |

### Comparative examples 1-3

Without use of the dicyclopentadiene phenol and 2,6-dimethyl phenol copolymer epoxy resin according to the present invention, the other epoxy resin with low dielectric constant is used as the comparable examples, the composition of which is given in Table 2. The benzaldehyde-phenol epoxy resin (Nan Ya Plastics Corporation NPPN-433) is used in the comparable example 1, the 2,6-dimethyl phenol phenolic aldehyde epoxy resin (Nan Ya Plastics Corporation NPPN-260) is used in the comparable example 2, and the dicyclopentadiene -phenol epoxy resin (Nan Ya Plastics Corporation NPPN-272H) is used in the comparative example 3.

**Table 2 Composition of varnish used and physical property of glass fiber substrate prepared in comparable example**

| Item | Comparative example 1 | Comparative example 2 | Comparative example 3 |
|---|---|---|---|
| Dicyclopentadiene-phenol epoxy resin Nan Ya Plastics Corporation NPPN-272H EEW270 g/eq | - | - | 100 |
| 2,6-dimethyl phenol formaldehyde epoxy resin Nan Ya Plastics Corporation NPPN-260 EEW198g/eq | - | 100 | - |
| Benzaldehyde-phenol functional group epoxy resin Nan Ya Plastics Corporation NPPN-433 EEW240g/eq | 100 | - | - |
| Melamine-phenol novolacSD-1817OH 80g/eq | 5.5 | 6 | 6.5 |
| Phenolic resin Nan Ya Plastics Corporation NPEH-710H OH 105g/eq | 10 | 10 | 10 |
| Phosphorus hardening agent ShinaLC950 OH 340g/eq | 20 | 22 | 22 |
| Active ester hardening agent DICHPC8000 OH 223g/eq | 30 | 30 | 30 |
| Additive-type phosphorus fire retardant Dazhong SPB-100 | 16 | 18 | 20 |
| filler SiO2 | 98 | 98 | 98 |
| Accelerant 2MI/DMF | 0.05 | 0.04 | 0.04 |
| Solvent PM or MEK | 150 | 150 | 150 |
| Tg °C | 170 | 153 | 162 |
| Dk (3G) | 4.48 | 4.29 | 4.30 |
| Df (3G) | 0.0083 | 0.0068 | 0.0072 |
| T-288 (copper-bearing) heat resistance (minute) | >60 | 27 | 32 |
| T288 solder heat resistance (minute) | >10 | >10 | >10 |

According to the above testing results, the glass fiber substrate prepared by substituting the dicyclopentadiene phenol and 2,6-dimethyl phenol copolymer epoxy resin according to the present invention into the formula has lower dielectric constant Dk and dissipation factor Df that those prepared from the benzaldehyde- phenol epoxy resin in the comparative example 1, the 2,6-dimethyl phenol in the comparative example 2 and the dicyclopentadiene-phenol epoxy resin in the comparative example 3, and after substituting the dicyclopentadiene phenol and 2,6-dimethyl phenol copolymer epoxy resin according to the present invention into the formula, Tg is higher than that of those prepared in the comparative examples 1-3.
1. Water absorption test (PCT for 2h)
   Testing method: cut the etched substrate into 5cm² square test sheets, after baking for 2hr at 105°C in a oven, place the test sheet in a pressure cooker at 202.65 kPa (2atm)×120°C for 120min, and record the weight difference of the test sheet before and after the PCT, which is divided by the initial weight of the test sheet to obtain the water absorption.
2. 288°C solider heat resistance ((PCT for 2h)
   Testing method: dipping the test sheet passing PCT in 288°C in a soldering furnace, and record the delamination time.
3. T-288 heat resistance (copper-bearing)
   Analyzed by a thermal mechanical analyzer. Testing method: cut copper clad laminates into 6.35mm² square test sheets and place the test sheet on the test deck of the thermal mechanical analyzer after baking in the oven at 105°C for 2h, heat at 10°C/ min till 288°C after zeroing, maintain 288°C, and record the delamination time of the copper clad laminates.
4. Dielectric constant test:
   Testing method: cut the substrate without the copper clad into 5cm×5cm square test sheets, and after baking in the oven at 105°C for 2h, measure the thickness by a thickness gauge, and place the test sheet in the impedance analyzer (Agilent E4991A) to obtain the average dielectric constant Dk of 3 points
5. Dissipation factor test:
   Testing method: cut the substrate without the copper clad into 5cm×5cm square test sheets, and after baking in the oven at 105°C for 2h, measure the thickness by a thickness gauge, and place the test sheet in the impedance analyzer (Agilent E4991A) to obtain the average dissipation factor Dk of 3 points
6. Glass-transition temperature test:
   Analyzed by a differential scanning calorimeter (DSC), and temperature rise rate 20°C/min.
7. Molecular weight Mw:
   Analyzed by gel chromatography GPC and corrected by the polystyrene with standard molecular weight

## Claims

1. A dicyclopentadiene phenol and 2,6-dimethyl phenol copolymer epoxy resin having the following Formula I: 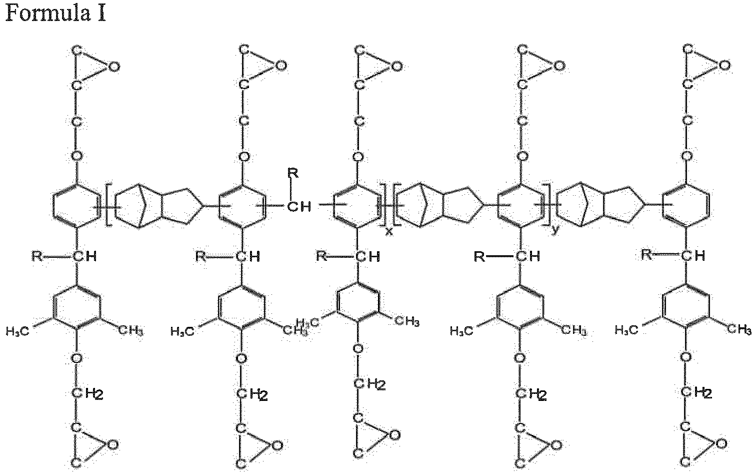 wherein
X is equal to 1-5 integers, and Y is equal to 1-5 integers, and
R represents a hydrogen, C₁-C₁₀ alkyl group, phenyl group, or phenyl hydroxyl group.

2. A preparation method for the Formula I of dicyclopentadiene phenol and 2,6-dimethyl phenol copolymer epoxy resin according to Claim 1, comprising two steps:
step 1 (synthesis of dicyclopentadiene phenol resin and 2,6-dimethyl phenol copolymer phenolic resin): add 1 mole phenolic hydroxyl group (phenolic group OH) of (a1) dicyclopentadiene phenol resin and (a2) 2,6-dimethyl phenol 1-2.5 mole into the solvent with intermediate boiling point and low water solubility (boiling point >110°C), add the acid catalyst, heat to 95-115°C, dissolve 0.8-1.5 mole aldehyde compound in water to prepare 20-50% aqueous solution of aldehyde compound (if the aldehyde compound is liquid, do not prepare the aqueous solution), dropwise add the aqueous solution into the above reaction mixture, react with the aqueous solution of aldehyde compound at 95-115°C for 1-6h; the common acid catalyst comprises methanesulfonic acid (MSA), p-toluenesulfonic acid (PTSA), oxalic acid, hydrochloric acid, the use level of the acid catalyst is 0.5-5% of the use level of the dicyclopentadiene phenol resin, and the aldehyde compound comprises formaldehyde, acetaldehyde, glyoxal, benzaldehyde, wherein the solvent is selected from the solvent with intermediate boiling point and low water solubility, such as methyl isobutyl ketone (MIBK), methylbenzene and other solvent with intermediate boiling point and low water solubility, the use level of the solvent is 5-20% of the use level of the dicyclopentadiene phenol resin; after dropwise addition and reaction, perform ripening reaction for 30min -2h, after the reaction, neutralize the acid catalyst with alkali, the alkali is not limited, including common industrial alkali, such as sodium hydroxide, potassium hydroxide, amine, after neutralization to pH 6-7, heat to 175-185°C to remove the solvent and 2,6-dimethyl phenol; after 175-185°C is reached, slowly reduce vacuum degree to prevent suddenly boiling till vacuum degree < 666.61 Pa (<5 torr), under the condition of vacuum degree < 666.61 Pa (<5torr), maintain 175-185°C for 1h, continuously add the solvent such as the methyl isobutyl ketone (MIBK), the methylbenzene, add water for desalination and washing, and obtain the dicyclopentadiene phenol resin and the 2,6-dimethyl phenol copolymer phenolic resin after filtration, removal of the solvent;
step 2 (synthesis of dicyclopentadiene phenol and 2,6-dimethyl phenol copolymer epoxy resin): reacting the dicyclopentadiene phenol and 2,6-dimethyl phenol copolymer prepared in step 1 with excess epichlorohydrin in the present of sodium hydroxide (NaOH) to prepare the dicyclopentadiene phenol and 2,6-dimethyl phenol copolymer epoxy resin, as shown in Steps (1) - (5):
(1) pre-reaction: add the dicyclopentadiene phenol resin and 2,6-dimethyl phenol copolymer phenolic resin and the epichlorohydrin (ECH), the equivalence ratio of which is 1: 1-8, into a cosolvent, the use level of which is 10-40% of the dicyclopentadiene phenol resin and the 2,6-dimethyl phenol copolymer phenolic resin, the cosolvent comprises propylene glycol monomethyl ether (PM) or alcohol, add 49.5% NaOH, the equivalence ratio of the dicyclopentadiene phenol resin and 2,6-dimethyl phenol copolymer phenolic resin to NaOH is 1: 0.1-0.2; pre-reaction temperature is 50-100°C and pre-reaction time is 2-4h;
(2) main reaction: dropwise add the 49.5% NaOH into the reaction mixture at 0.77-0.97 : 1 equivalence ratio of NaOH to the dicyclopentadiene phenol resin and 2,6-dimethyl phenol copolymer phenolic resin; reaction temperature is 60-65°C, vacuum degree is 21331.52 - 25331.18 Pa (160-190 torr) and dropwise addition time is 2-5h, and during the main reaction, remove the water from the reaction system by co-boiling of water and ECH, and return the ECH on the low layer to the system by phase separation in the phase separating barrel, and discharge the water layer;
(3) removal of epichlorohydrin: remove the epichlorohydrin ECH at 160°C temperature and vacuum degree < 666.61 Pa (<5 torr);
(4) refining reaction: add the solvent to prepare 30-50% solid content of resin solution, add 20% NaOH for refining reaction; the use level of NaOH = measured value of hydrolysable chlorine ÷ 35.5 × 40 × refining coefficient 1.5 × weight of resin ÷0.2; refining reaction temperature is 70-90°C, and refining reaction time is 1-3h;
(5) after the reaction, add the water for desalination and liquid separation, and filter the resin solvent after neutralizing and washing the separated liquid, and obtain the dicyclopentadiene phenol and 2,6-dimethyl phenol copolymer epoxy resin according to claim 1 after removal of the solvent.

3. A epoxy resin varnish for glass fiber substrate comprises the following components:
(1) the dicyclopentadiene phenol resin and 2,6-dimethyl phenol copolymer epoxy resin according to claim 1, the content of which is 30-80% of the resin (the total content of the resin is equal to the sum of the contents of the components 1-4) ;
(2) a multifunctional or bifunctional, or modified epoxy resin, the content of which is 0-25% of the resin, selected from o-cresol phenolic aldehyde epoxy resin, phenolic aldehyde epoxy resin, benzaldehyde-phenol multifunctional epoxy resin, dicyclopentadiene-phenol epoxy resin, bisphenol A formaldehyde epoxy resin, tetraphenol ethane phenolic aldehyde epoxy resin, tri-(hydroxy phenyl) methane phenolic aldehyde epoxy resin, phosphorus containing epoxy resin, 2,6-dimethyl phenol phenolic aldehyde epoxy resin, brominated epoxy resin, tetrabromobisphenol A epoxy resin, bisphenol A epoxy resin, and epoxide and isocyanate copolymer;
(3) a hardening agent, the content of which is 15-60% of the resin, selected from phenolic resin, bisphenol A phenolic resin, dicyclopentadiene phenol resin, benzaldehyde- phenol phenolic resin, melamine - phenol phenolic resin (melamine-phenol novolac), active ester hardening agent, styrene maleic anhydride copolymer (SMA), bisphenol A benzoxazine (BPA Benzoxazine), bisphenol F benzoxazine (BPF Benzoxazine), dicyclopentadiene -phenolbenzoxazine (Dicyclopentadiene-phenol Benzoxazine), polyphenyl ether (PPE), and more than two (or two) of the above hardening agents;
(4) a fire retardant, the content of which is 10-40% of the resin, including a reactive fire retardant and a additive fire retardant, selected from phosphorus containing bisphenol A phenolic aldehyde hardening agent (phosphorus content 5-10%), hexaphenoxy cyclotriphosphazene (phosphorus content 13.4%, nitrogen content 8%) and tetrabromobisphenol A (bromine content 58.5%);
(5) a filler, the content of which is 0-45% of the all varnish components (calculated in the solid state, the total component content of the varnish is equal to the sum of the content of the components 1-5), selected from silicon dioxide and aluminum hydroxide;
(6) a solidification accelerant, the content of which is 0.01-0.2% of epoxy resin and hardening agent (i.e. the sum of the content of components 1-3), selected from dimethyl imidazole, diphenyl imidazole, diethyl tetramethyl imidazole and benzyl dimethylamine; and
(7) a solvent, the content of which is 50-70% of all solid varnish components, selected from acetone, butanone, cyclohexanone, dimethoxy ethanol (MCS), propylene glycol monomethyl ether (PM), and methylbenzene.

4. The epoxy resin varnish according to Claim 3, wherein, phosphorus containing epoxy resin of the component (2) is the reactive affixture of 10-(2',5'-dihydroxyphenyl)-9,10-dihydro-9-oxa-10-phosphaphenanthre ne-10-oxide and o-cresol phenolic aldehyde epoxy resin or phenolic aldehyde epoxy resin.

5. The epoxy resin varnish according to Claim 3, wherein, for the epoxy resin and isocyanate copolymer of the component (2), the isocyanate is methylene diphenyl diisocyanate (MDI), methylbenzene isocyanate (TDI) or their isomers.

6. The epoxy resin varnish according to Claim 3, wherein, the bisphenol A hardening agent and phosphorus containing bisphenol F hardening agent of the component (4) are the reactive affixture of 10-(2', 5'-dihydroxyphenyl)-9,10-dihydro-9-oxa-10-phosphaphenanthrene-10-oxide and bisphenol A formaldehyde phenolic resole compound or bisphenol F formaldehyde phenolic resole (phosphorus content 5-10%).

## Patentansprüche

1. Ein Dicyclopentadienphenol und 2,6-Dimethylphenol-Copolymer-Epoxidharz, das die folgende Formel (I) aufweist: 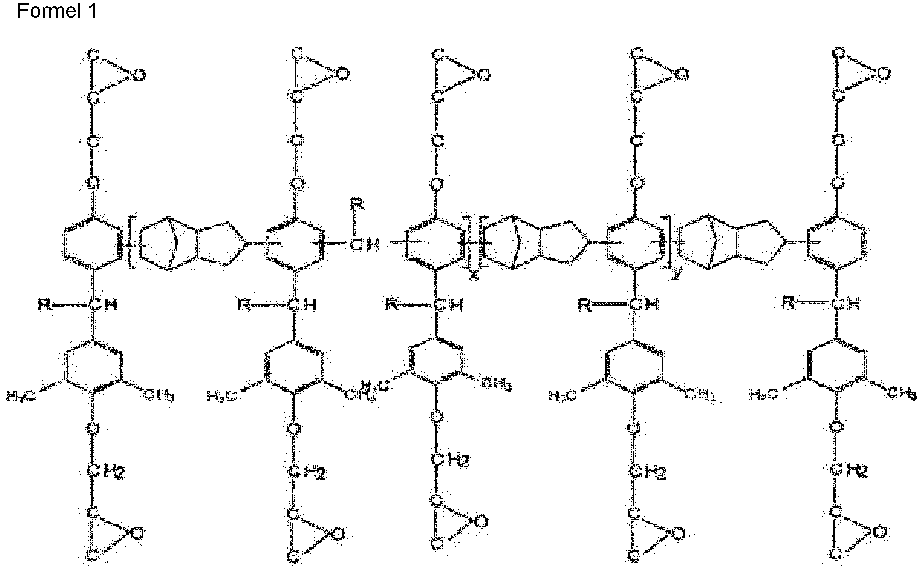 wobei
X einer ganzen Zahl von 1-5 entspricht und Y einer ganzen Zahl von 1-5 entspricht, und
R für Wasserstoff, eine C₁-C₁₀ Alkylgruppe, eine Phenylgruppe oder eine Phenylhydroxylgruppe steht.

2. Ein Herstellungsverfahren für die Formel (I) des Dicyclopentadienphenol und 2,6-Dimethylphenol-Copolymer-Epoxidharzes gemäß Anspruch 1,
umfassend zwei Schritte:
Schritt 1 (Synthese von Dicyclopentadienphenolharz und 2,6-Dimethylphenol-Copolymer-Phenolharz): Gebe 1 Mol phenolische Hydroxylgruppe (phenolische OH-Gruppe) von (a1) Dicyclopentadienphenolharz und (a2) 1-2,5 Mol 2,6-Dimethylphenol in das Lösungsmittel mit mittlerem Siedepunkt und geringer Wasserlöslichkeit (Siedepunkt >110°C), gebe den sauren Katalysator hinzu, erhitze auf 95-115°C, löse 0,8-1,5 Mol Aldehydverbindung in Wasser, um eine 20-50%ige wässrige Lösung der Aldehydverbindung herzustellen (wenn die Aldehydverbindung flüssig ist, stelle die wässrige Lösung nicht her), gebe die wässrige Lösung tropfenweise in die obige Reaktionsmischung, setze mit der wässrigen Lösung der Aldehydverbindung bei 95-115°C für 1-6h um; wobei der übliche Säurekatalysator Methansulfonsäure (MSA), p-Toluolsulfonsäure (PTSA), Oxalsäure, Salzsäure umfasst, wobei die Verwendungsmenge des Säurekatalysators 0,5-5% der Verwendungsmenge des Dicyclopentadienphenolharzes beträgt und die Aldehydverbindung Formaldehyd, Acetaldehyd, Glyoxal, Benzaldehyd umfasst, wobei das Lösungsmittel ausgewählt ist aus dem Lösungsmittel mit einem mittleren Siedepunkt und geringer Wasserlöslichkeit, wie Methylisobutylketon (MIBK), Methylbenzol und anderem Lösungsmittel mit mittlerem Siedepunkt und geringer Wasserlöslichkeit, wobei die Verwendungsmenge des Lösungsmittels 5-20% der Verwendungsmenge des Dicyclopentadienphenolharzes beträgt;
führe nach der tropfenweisen Zugabe und Reaktion für 30min-2h eine Reifungsreaktion durch, neutralisiere den Säurekatalysator nach der Reaktion mit einer Base, wobei die Base keiner Beschränkung unterliegt, einschließlich üblicher industrieller Basen wie Natriumhydroxid, Kaliumhydroxid, Amin, nach der Neutralisation auf pH 6-7, erhitze auf 175-185°C, um das Lösungsmittel und 2,6-Dimethylphenol zu entfernen; nachdem 175-185°C erreicht sind, reduziere langsam den Vakuumgrad, um ein plötzliches Sieden zu verhindern, bis zu einem Vakuumgrad von < 666,61 Pa (<5 Torr), behalte unter der Bedingung eines Vakuumgrades von < 666,61 Pa (<5 Torr) 175-185°C für 1h bei, gebe kontinuierlich das Lösungsmittel wie Methylisobutylketon (MIBK), Methylbenzol, hinzu, gebe Wasser zur Entsalzung und zum Waschen hinzu und erhalte das Dicyclopentadienphenolharz und das 2,6-Dimethylphenol-Copolymer-Phenolharz nach der Filtration, Entfernung des Lösungsmittels;
Schritt 2 (Synthese von Dicyclopentadienphenol und 2,6-Dimethylphenol-Copolymer-Epoxidharz): Umsetzen des in Schritt 1 hergestellten Dicyclopentadienphenol und 2,6-Dimethylphenol-Copolymers mit einem Überschuss an Epichlorhydrin in Gegenwart von Natriumhydroxid (NaOH), um das Dicyclopentadienphenol und 2,6-Dimethylphenol-Copolymer-Epoxidharz herzustellen, wie in den Schritten (1) - (5) gezeigt:
(1) Vorreaktion: Gebe Dicyclopentadienphenolharz und 2,6-Dimethylphenol-Copolymer-Phenolharz und Epichlorhydrin (ECH), dessen Äquivalenzverhältnis 1: 1-8 beträgt, in ein Co-Lösungsmittel, dessen Verwendungsmenge 10-40% von Dicyclopentadienphenolharz und 2,6-Dimethylphenol-Copolymer-Phenolharz beträgt, wobei das Co-Lösungsmittel Propylenglykolmonomethylether (PM) oder Alkohol umfasst, gebe 49,5% NaOH hinzu, wobei das Äquivalenzverhältnis von Dicyclopentadienphenolharz und 2,6-Dimethylphenol-Copolymer-Phenolharz zu NaOH 1:0,1-0,2 beträgt; wobei die Vorreaktionstemperatur 50-100°C und die Vorreaktionszeit 2-4h beträgt;
(2) Hauptreaktion: Gebe 49,5% NaOH tropfenweise in die Reaktionsmischung bei einem Äquivalenzverhältnis von 0,77-0,97 : 1 von NaOH zu Dicyclopentadienphenolharz und 2,6-Dimethylphenol-Copolymer-Phenolharz; wobei die Reaktionstemperatur 60-65°C beträgt, der Vakuumgrad 21331,52-25331,18 Pa (160-190 Torr) beträgt und die Zeit für die tropfenweise Zugabe 2-5h beträgt, und entferne, während der Hauptreaktion, das Wasser aus dem Reaktionssystem durch Co-Sieden von Wasser und ECH und gebe das ECH zur unteren Schicht an das System durch Phasentrennung in dem Phasentrennzylinder zurück und entlasse die Wasserschicht;
(3) Entfernung von Epichlorhydrin: Entferne des Epichlorhydrin ECH bei einer Temperatur von 160°C und einem Vakuumgrad von < 666,61 Pa (<5 Torr);
(4) Weiterverarbeitungsreaktion: Gebe das Lösungsmittel hinzu, um einen Feststoffgehalt der Harzlösung von 30-50% herzustellen, gebe 20% NaOH zur Weiterverarbeitungsreaktion hinzu; Verwendungsgrad von NaOH = gemessener Wert von hydrolysierbarem Chlor ÷ 35,5 × 40 × Weiterverarbeitungskoeffizient 1,5 × Gewicht des Harzes ÷ 0,2; wobei die Weiterverarbeitungsreaktionstemperatur 70-90°C beträgt und die Weiterverarbeitungsreaktionszeit 1-3h beträgt;
(5) Gebe nach der Reaktion das Wasser zur Entsalzung und Flüssigkeitsabtrennung hinzu und filtriere das Harzlösungsmittel nach dem Neutralisieren und Waschen der abgetrennten Flüssigkeit und erhalte, nach der Entfernung des Lösungsmittels, das Dicyclopentadienphenol und 2,6-Dimethylphenol-Copolymer-Epoxyharz gemäß Anspruch 1.

3. Ein Epoxidharzlack für ein Glasfasersubstrat, umfassend die folgenden Komponenten:
(1) Das Dicyclopentadienphenolharz und 2,6-Dimethylphenol-Copolymer-Epoxidharz gemäß Anspruch 1, dessen Anteil 30-80% des Harzes beträgt (der Gesamtanteil des Harzes ist gleich der Summe der Anteile der Komponenten 1-4);
(2) Ein multifunktionales oder bifunktionales oder modifiziertes Epoxidharz, dessen Anteil 0-25% des Harzes beträgt, ausgewählt aus o-Kresol-Phenolaldehyd-Epoxidharz, Phenolaldehyd-Epoxidharz, Benzaldehyd-Phenol multifunktionales Epoxidharz, Dicyclopentadien-Phenol-Epoxidharz, Bisphenol A-Formaldehyd-Epoxidharz, Tetraphenolethan-Phenolaldehyd-Epoxidharz, Tri-(hydroxyphenyl)methan-Phenolaldehyd-Epoxidharz, Phosphor-enthaltendes Epoxidharz, 2,6-Dimethylphenol-Phenolaldehyd-Epoxidharz, bromiertes Epoxidharz, Tetrabrombisphenol A-Epoxidharz, Bisphenol-A-Epoxidharz und Epoxid- und Isocyanat-Copolymer;
(3) Ein Härtungsmittel, dessen Anteil 15-60% des Harzes beträgt, ausgewählt aus Phenolharz, Bisphenol A-Phenolharz, Dicyclopentadien-Phenolharz, Benzaldehyd-Phenol-Phenolharz, Melamin-Phenol-Phenolharz (Melamin-Phenol-Novolak), Aktivester-Härtungsmittel, Styrol-Maleinsäureanhydrid-Copolymer (SMA), Bisphenol A-Benzoxazin (BPA-Benzoxazin), Bisphenol F-Benzoxazin (BPF-Benzoxazin), Dicyclopentadien-Phenolbenzoxazin (Dicyclopentadien-PhenolBenzoxazin), Polyphenylether (PPE) und mehr als zwei (oder zwei) der obigen Härtungsmittel;
(4) Ein Flammschutzmittel, dessen Anteil 10-40% des Harzes beträgt, einschließlich eines reaktiven Flammschutzmittels und eines additiven Flammschutzmittels, ausgewählt aus einem Phosphorenthaltenden Bisphenol A-Phenolaldehyd-Härtungsmittel (Phosphoranteil 5-10%), Hexaphenoxy-Cyclotriphosphazen (Phosphoranteil 13,4%, Stickstoffanteil 8%) und Tetrabrombisphenol A (Bromanteil 58,5%);
(5) Einen Füllstoff, dessen Anteil 0-45% aller Lackkomponenten beträgt (berechnet im festen Zustand, wobei der Gesamtanteil der Komponenten des Lacks der Summe des Anteils der Komponenten 1-5 entspricht), ausgewählt aus Siliziumdioxid und Aluminiumhydroxid;
(6) Einen Erstarrungsbeschleuniger, dessen Anteil 0,01-0,2% des Epoxyharzes und des Härtungsmittels (d.h. die Summe des Anteils der Komponenten 1-3) beträgt, ausgewählt aus Dimethylimidazol, Diphenylimidazol, Diethyltetramethylimidazol und Benzyldimethylamin; und
(7) Ein Lösungsmittel, dessen Anteil 50-70% aller festen Lackkomponenten beträgt, ausgewählt aus Aceton, Butanon, Cyclohexanon, Dimethoxyethanol (MCS), Propylenglykolmonomethylether (PM) und Methylbenzol.

4. Der Epoxidharzlack gemäß Anspruch 3, wobei das Phosphor-enthaltende Epoxidharz der Komponente (2) die reaktive Verbindung von 10-(2',5'-Dihydroxyphenyl)-9,10-dihydro-9-oxa-10-phosphaphenanthren-10-oxid und o-Kresol-Phenolaldehyd-Epoxidharz oder Phenolaldehyd-Epoxidharz ist.

5. Der Epoxidharzlack gemäß Anspruch 3, wobei für das Epoxidharz und das Isocyanat-Copolymer der Komponente (2), das Isocyanat Methylendiphenyldiisocyanat (MDI), Methylbenzolisocyanat (TDI) oder deren Isomere ist.

6. Der Epoxidharzlack gemäß Anspruch 3, wobei das Bisphenol A-Härtungsmittel und das Phosphor-enthaltende Bisphenol F-Härtungsmittel der Komponente (4) die reaktive Verbindung von 10-(2',5'-Dihydroxyphenyl)-9,10-dihydro-9-oxa-10-phosphaphenanthren-10-oxid und der Bisphenol A-Formaldehyd-Phenol-Resol-Verbindung oder von Bisphenol F-Formaldehyd-Phenol-Resol (Phosphorgehalt 5-10%) sind.

## Revendications

1. Résine époxy de copolymère de 2,6-diméthylphénol et de dicyclopentadiènephénol répondant à la formule I suivante : 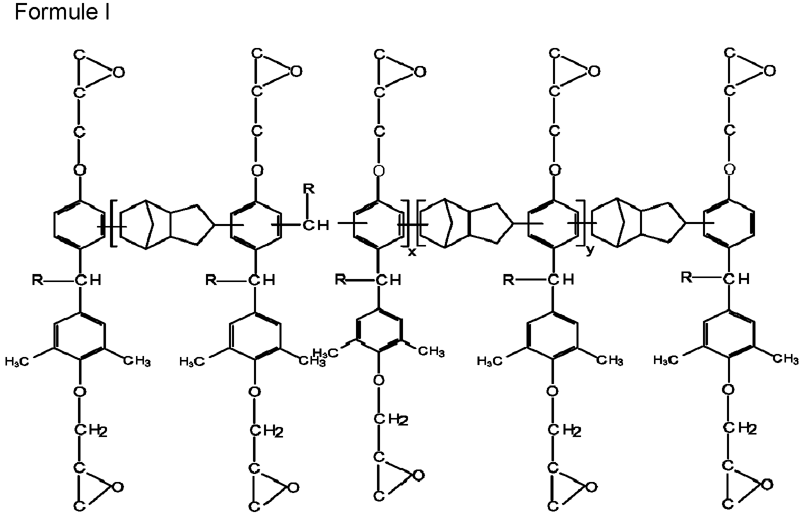 dans laquelle
X est un entier de 1 à 5, et Y est un entier de 1 à 5, et
R représente un hydrogène, un groupe alkyle en C₁ à C₁₀, un groupe phényle, ou un groupe hydroxyphényle.

2. Procédé de préparation de la résine époxy de copolymère de dicyclopentadiènephénol et de 2,6-diméthylphénol de formule I selon la revendication 1, comprenant deux étapes :
étape 1 (synthèse de résine phénolique de copolymère de 2,6-diméthylphénol et de résine de dicyclopentadiènephénol) : addition de (a1) 1 mole de groupe hydroxyphénolique (groupe OH phénolique) d'une résine de dicyclopentadiènephénol et (a2) 1 à 2,5 moles de 2,6-diméthylphénol dans un solvant ayant un point d'ébullition intermédiaire (point d'ébullition > 110°C) et une faible solubilité dans l'eau, addition du catalyseur acide, chauffage à 95-115°C, dissolution de 0,8 à 1,5 moles de composé aldéhyde dans de l'eau pour préparer une solution aqueuse à 20-50 % de composé aldéhyde (si le composé aldéhyde est liquide, ne pas préparer la solution aqueuse), addition goutte à goutte de la solution aqueuse dans le mélange réactionnel ci-dessus, réaction avec la solution aqueuse de composé aldéhyde à 95-115°C pendant 1 à 6 heures ; le catalyseur acide commun comprend de l'acide méthanesulfonique (MSA), de l'acide p-toluènesulfonique (PTSA), de l'acide oxalique, de l'acide chlorhydrique, la quantité utilisée du catalyseur acide est de 0,5 à 5 % de la quantité utilisée de la résine de dicyclopentadiènephénol, et le composé aldéhyde comprend du formaldéhyde, de l'acétaldéhyde, du glyoxal, du benzaldéhyde, lequel solvant est choisi parmi un solvant ayant un point d'ébullition intermédiaire et une faible solubilité dans l'eau, tel que la méthylisobutylcétone (MIBK), le méthylbenzène et un autre solvant ayant un point d'ébullition intermédiaire et une faible solubilité dans l'eau, la quantité utilisée du solvant est de 5 à 20 % de la quantité utilisée de la résine de dicyclopentadiènephénol ; après addition goutte à goutte et réaction, mise en œuvre d'une réaction de maturation pendant 30 minutes à 2 heures, après la réaction neutralisation du catalyseur acide avec un alcali, lequel alcali n'est pas limité et englobe un alcali industriel courant, tel que l'hydroxyde de sodium, l'hydroxyde de potassium, une amine, après neutralisation à pH 6-7, chauffage à 175-185°C pour éliminer le solvant et le 2,6-diméthylphénol ; après que la température de 175 à 185°C a été atteinte, réduction lente du degré de vide pour empêcher une ébullition soudaine jusqu'à un degré de vide < 666,61 Pa (< 5 Torr), dans des conditions de degré de vide < 666,61 Pa (< 5 Torr), maintien à 175-185°C pendant 1 heure, addition en continu du solvant tel que la méthylisobutylcétone (MIBK), le méthylbenzène, addition d'eau pour le dessalage et le lavage, et obtention de la résine phénolique de copolymère de 2,6-diméthylphénol et de la résine de dicyclopentadiènephénol après filtration, élimination du solvant ;
étape 2 (synthèse de résine époxy de copolymère de 2,6-diméthylphénol et de dicyclopentadiènephénol) réaction du copolymère de 2,6-diméthylphénol et de dicyclopentadiènephénol préparé dans l'étape 1 avec un excès d'épichlorhydrine en présence d'hydroxyde de sodium (NaOH) pour préparer la résine époxy de copolymère de 2,6-diméthylphénol et de dicyclopentadiènephénol, comme indiqué dans les étapes (1) à (5) :
(1) pré-réaction addition de la résine phénolique de copolymère de 2,6-diméthylphénol et de résine de dicyclopentadiènephénol et de l'épichlorhydrine (ECH), avec un rapport d'équivalents de 1/1 à 8, dans un co-solvant, dont la quantité utilisée est de 10 à 40 % de la résine phénolique de copolymère de 2,6-diméthylphénol et de résine de dicyclopentadiènephénol, lequel co-solvant comprend de l'éther monométhylique de propylèneglycol (PM) ou un alcool, addition de NaOH à 49,5 %, le rapport d'équivalents de la résine phénolique de copolymère de 2,6-diméthylphénol et de résine de dicyclopentadiènephénol au NaOH étant de 1/0,1 à 0,2 ; la température de pré-réaction étant de 50 à 100°C et le temps de pré-réaction étant de 2 à 4 heures ;
(2) réaction principale : addition goutte à goutte du NaOH à 49,5 % dans le mélange réactionnel en un rapport d'équivalents du NaOH à la résine phénolique de copolymère de 2,6-diméthylphénol et de résine de dicyclopentadiènephénol de 0,77 à 0,97/1 ; la température de réaction étant de 60 à 65°C, le degré de vide étant de 21331,52 à 25331,18 Pa (160 à 190 Torr), et le temps d'addition goutte à goutte étant de 2 à 5 heures et, durant la réaction principale, élimination de l'eau dans le système réactionnel par co-ébullition de l'eau et de l'ECH, et renvoi de l'ECH sur la couche basse au système par séparation de phases dans la colonne de séparation de phases, et évacuation de la couche d'eau ;
(3) élimination de l'épichlorhydrine : élimination de l'épichlorhydrine ECH à une température de 160°C et sous un degré de vide < 666,61 Pa (< 5 Torr) ;
(4) réaction de raffinage : addition du solvant pour préparer une solution de résine à 30-50 % d'extrait sec, addition de NaOH à 20 % pour raffiner la réaction ; la quantité utilisée du NaOH = valeur mesurée du chlore hydrolysable ÷ 35,5 × 40 × coefficient de raffinage 1,5 × poids de la résine ÷ 0,2 ; la température de la réaction de raffinage étant de 70 à 90°C et le temps de la réaction de raffinage étant de 1 à 3 heures ;
(5) après la réaction, addition de l'eau pour le dessalage et séparation des liquides, et filtration du solvant de résine après neutralisation et lavage du liquide séparé, et obtention de la résine époxy de copolymère de 2,6-diméthylphénol et de dicyclopentadiènephénol selon la revendication 1 après élimination du solvant.

3. Vernis en résine époxy pour substrat en fibres de verre comprenant les composants suivants :
(1) la résine époxy de copolymère de 2,6-diméthylphénol et de résine de dicyclopentadiènephénol selon la revendication 1, dont la teneur est de 30 à 80 % de la résine (la teneur totale en la résine étant égale à la somme des teneurs en les composants 1 à 4) ;
(2) une résine époxy multifonctionnelle ou bifonctionnelle ou modifiée, dont la teneur est de 0 à 25 % de la résine, choisie parmi une résine époxy d'aldéhyde phénolique et d'o-crésol, une résine époxy d'aldéhyde phénolique, une résine époxy multifonctionnelle de benzaldéhyde-phénol, une résine époxy de dicyclopentadiènephénol, une résine époxy de formaldéhyde et de bisphénol A, une résine époxy d'aldéhyde phénolique et de tétraphénoléthane, une résine époxy d'aldéhyde phénolique et de tri(hydroxyphényl)méthane, une résine époxy phosphorée, une résine époxy d'aldéhyde phénolique et de 2,6-diméthylphénol, une résine époxy bromée, une résine époxy de tétrabromobisphénol A, une résine époxy de bisphénol A, et un copolymère d'isocyanate et d'époxyde ;
(3) un agent durcisseur, dont la teneur est de 15 à 60 % de la résine, choisi parmi une résine phénolique, une résine phénolique de bisphénol A, une résine de dicyclopentadiènephénol, une résine phénolique de benzaldéhyde-phénol, une résine phénolique de mélamine-phénol (novolaque de mélamine-phénol), un agent durcisseur de type ester actif, un copolymère d'anhydride maléique et de styrène (SMA), la bisphénol A benzoxazine (BPA benzoxazine), la bisphénol F benzoxazine (BPF benzoxazine), le dicyclopentadiène-phénolbenzoxazine (dicyclopentadiènephénol benzoxazine), un polyphényléther (PPE), et plus de deux (ou deux) des agents durcisseurs ci-dessus ;
(4) un agent ignifugeant, dont la teneur est de 10 à 40 % de la résine, comprenant un agent ignifugeant réactif et un agent ignifugeant additif, choisi parmi un agent durcisseur aldéhyde phénolique de bisphénol A phosphoré (teneur en phosphore 5 à 10 %), l'hexaphénoxycyclotriphosphazène (teneur en phosphore 13,4 %, teneur en azote 8 %) et le tétrabromobisphénol A (teneur en brome 58,5 %) ;
(5) une charge, dont la teneur est de 0 à 45 % de tous les composants du vernis (calculés à l'état solide, la teneur totale en les composants du vernis étant égale à la somme des teneurs en les composants 1 à 5), choisie parmi le dioxyde de silicium et l'hydroxyde d'aluminium ;
(6) un accélérateur de solidification, dont la teneur est de 0,01 à 0,2 % de la résine époxy et de l'agent durcisseur (c'est-à-dire la somme des teneurs en les composants 1 à 3), choisi parmi le diméthylimidazole, le diphénylimidazole, le diéthyltétraméthylimidazole et la benzyldiméthylamine ; et
(7) un solvant, dont la teneur est de 50 à 70 % de tous les composants solides du vernis, choisi parmi l'acétone, la butanone, la cyclohexanone, le diméthoxyéthanol (MCS), l'éther monométhylique de propylèneglycol (PM), et le méthylbenzène.

4. Vernis en résine époxy selon la revendication 3, dans lequel la résine époxy phosphorée du composant (2) est le produit de réaction d'addition de 10-oxyde de 10-(2',5'-dihydroxyphényl)-9,10-dihydro-9-oxa-10-phosphaphénanthrène et de résine époxy d'aldéhyde phénolique et d'o-crésol ou de résine époxy d'aldéhyde phénolique.

5. Vernis en résine époxy selon la revendication 3, dans lequel, pour le copolymère d'isocyanate et de résine époxy du composant (2), l'isocyanate est le diisocyanate de méthylènediphényle (MDI), l'isocyanate de méthylbenzène (TDI) ou leurs isomères.

6. Vernis en résine époxy selon la revendication 3, dans lequel l'agent durcisseur bisphénol A et l'agent durcisseur bisphénol F phosphoré du composant (4) sont le produit de réaction d'addition de 10-oxyde de 10-(2',5'-dihydroxyphényl)-9,10-dihydro-9-oxa-10-phosphaphénanthrène et de composé résol phénolique de formaldéhyde et de bisphénol A ou de résol phénolique de formaldéhyde et de bisphénol F (teneur en phosphore 5 à 10 %).
